Europäisches Patentamt

(19) European Patent Office

Office européen des brevets

(11) Numéro de publication: **0 248 747**
**B1**

(12) **FASCICULE DE BREVET EUROPEEN**

(45) Date de publication du fascicule du brevet:
27.12.89

(21) Numéro de dépôt: 87420143.7

(22) Date de dépôt: 26.05.87

(51) Int. Cl.⁴: **B66D 1/46, H02P 7/48**

(54) Equipement pour la commande de l'organe moteur électrique d'un mécanisme de manutention de charges.

(30) Priorité: 28.05.86 FR 8607997

(43) Date de publication de la demande:
09.12.87 Bulletin 87/50

(45) Mention de la délivrance du brevet:
27.12.89 Bulletin 89/52

(84) Etats contractants désignés:
AT BE CH DE ES GB GR IT LI LU NL SE

(56) Documents cités:
DE-A- 1 456 463
DE-A- 3 309 230
US-A- 3 940 110
US-A- 4 145 645
US-A- 4 374 353
US-A- 4 467 257

(73) Titulaire: POTAIN, 18 rue de Charbonnières, Ecully(FR)

(72) Inventeur: Cercueil, Etienne, Baudemont, F-71800 La Clayette(FR)

(74) Mandataire: Bratel, Gérard et al, Cabinet GERMAIN & MAUREAU B.P. 3011, F-69392 Lyon Cédex 03(FR)

ACTORUM AG

**Description**

La présente invention se rapporte à un équipement permettant de commander l'organe moteur électrique qui actionne un mécanisme de manutention de charges, et en particulier un mécanisme de levage de charges, tel qu'un treuil; cet équipement est conçu de manière à obtenir une grande souplesse de fonctionnement, notamment en permettant de déposer et de "décoller" des charges en douceur, tout en conservant des grandes vitesses de levage, aussi bien en montée qu'en descente.

Une solution technique connue, visant déjà ce but, consiste en l'utilisation d'un moteur électrique asynchrone à cage et à enroulements multiples. L'alimentation sélective des enroulements du moteur, avec couplage éventuel, permet de faire tourner ce moteur à différentes vitesses, un tel moteur possédant par exemple trois vitesses de synchronisme distinctes. Une telle solution est décrite, par exemple, dans le document DE-A 3 309 230 qui montre un ensemble de contrôle et de commande à relais, avec un inverseur et avec des contacteurs, pour l'alimentation sélective des différents enroulements du moteur électrique asynchrone, et pour la sélection du sens de rotation de ce moteur.

Cette première solution comporte les inconvénients suivants:

La vitesse minimum est imposée, puisqu'elle correspond, au glissement près, à la plus faible des vitesses de synchronisme du moteur. Cette vitesse minimum peut s'avérer trop élevée pour des manœuvres d'approche délicates, ce qui conduit l'opérateur à effectuer une commande d'approche "par impulsions" ou nécessite des vitesses de moteur faibles, qui entraînent pour un couple donné une augmentation considérable des encombrements et/ou une diminution du facteur de puissance du moteur.

De plus, la nécessité de diminuer les efforts dynamiques lors du passage d'un enroulement à un autre, ou du couplage des enroulements du moteur, tout en conservant des vitesses élevées, peut conduire à un nombre élevé d'enroulements, ce qui accroît l'encombrement et la complexité de l'équipement de commande.

Une autre solution connue (voir par exemple DE-A 1 456 463) consiste en l'utilisation d'un gradateur ou variateur de tension, généralement avec asservissement de vitesse, en association avec un moteur électrique à cage qui, constructivement, possède une seule vitesse de synchronisme. Le gradateur de tension permet de faire varier la vitesse du moteur de façon continue et contrôlable, entre une vitesse nulle et la vitesse nominale. Les inconvénients d'une telle solution sont les suivants:

L'énergie dissipée au rotor du moteur est approximativement proportionnelle au couple fourni et à la vitesse de glissement du moteur; cette vitesse étant elle-même égale au produit de la vitesse nominale et du glissement, il en découle que, à couple constant (par exemple : le couple exercé par la charge maximum d'un treuil de levage), l'énergie dissipée au rotor est d'autant plus importante que la vitesse de synchronisme est grande et que l'on utilise des glissements importants (par exemple lors de la pose ou de la descente des charges). Cette énergie qui est perdue en chaleur, malgré l'utilisation de puissants ventilateurs eux-mêmes causes de pertes d'énergie, limite fortement les puissances contrôlables par un tel dispositif.

Par ailleurs, dans ce dispositif connu, les éléments de puissance électroniques du gradateur ou variateur de tension doivent être dimensionnés pour la puissance maximale du moteur électrique, ces éléments intervenant en permanence.

La présente invention vise à pallier aux inconvénients des deux solutions précédentes, ses buts étant notamment de diminuer l'énergie perdue au rotor par suite du glissement et de réduire le dimensionnement des éléments de puissance électroniques, tout en procurant une grande souplesse dans la manutention des charges surtout pour une pose et un "décollement" en douceur, même dans le cas d'un moteur de forte puissance.

A cet effet, l'invention a pour objet un équipement pour la commande de l'organe moteur électrique d'un mécanisme de manutention de charges, et en particulier d'un mécanisme de levage de charges, l'organe moteur étant un moteur électrique asynchrone à cage et à enroulements multiples, correspondant à plusieurs vitesses de synchronisme, cet équipement comprenant essentiellement, en combinaison :

- un ensemble de contrôle et de commande à relais, avec un inverseur et avec des contacteurs, pour l'alimentation sélective des différents enroulements du moteur électrique, et pour la sélection du sens de rotation de ce moteur,

- un gradateur ou variateur de tension, du type dit à "quatre quadrants", agissant sur l'enroulement du moteur électrique correspondant à la plus petite vitesse, ledit gradateur ou variateur étant asservi en vitesse par un capteur détectant la vitesse du moteur ou d'une partie mobile du mécanisme, et

- un manipulateur avec un organe de commande manuelle agissant d'une part sur un potentiomètre dont la position pilote le gradateur ou variateur de tension pour déterminer la vitesse du moteur fonctionnant sur l'enroulement correspondant à la plus petite vitesse, et d'autre part sur des contacts mettant en service l'ensemble précité de contrôle et de commande, pour l'alimentation directe des enroulements du moteur correspondant à la ou chaque vitesse intermédiaire et à la plus grande vitesse.

L'équipement objet de l'invention réunit ainsi les avantages des deux solutions antérieures rappelées plus haut, tout en supprimant leurs inconvénients respectifs. Le gradateur ou variateur de tension a pour rôle de faire varier la tension d'alimentation du moteur électrique, uniquement lorsque ce dernier fonctionne sur son enroulement "petite vitesse", et de sélectionner le sens du champ tournant du moteur, qui fonctionne alors à une vitesse choisie par l'opérateur à l'aide du manipulateur et, plus particulièrement, à l'aide du potentiomètre de ce manipulateur. La pose ou le "décollement" d'une charge, même très lourde, peuvent ainsi s'effectuer à la vitesse la mieux adaptée donc avec douceur et souplesse, avec le résultat supplémentaire que le dimensionnement des éléments de puissance électroniques et l'énergie perdue au rotor sont réduits de manière très sensible. En effet, dans la phase de fonctionnement mettant en oeuvre le gradateur ou variateur de tension, l'énergie dissipée dans le rotor du moteur correspond au produit du couple nominal du moteur et de la vitesse de synchronisme donnée par l'enroulement "petite vitesse" ; cette perte d'énergie se trouve donc réduite dans un rapport égal à celui des deux vitesses de synchronisme correspondant, l'une, à l'enroulement de plus petite vitesse, et l'autre, à l'enroulement de plus grande vitesse.

Après la phase de démarrage, le moteur peut tourner à des vitesses plus importantes, pour déplacer la charge à des vitesses plus élevées, ce qui est réalisé en commandant l'alimentation directe des enroulements, et leur commutation, par l'ensemble de contrôle et de commande à relais par exemple électromécaniques. La mise en action successive des contacts du manipulateur provoque alors l'alimentation des enroulements du moteur, dans l'ordre des vitesses croissantes et jusqu'à l'obtention de la vitesse maximum, sans intervention du gradateur ou variateur de tension.

A cet effet, il est avantageusement prévu une liaison électrique entre, d'une part, l'ensemble de contrôle et de commande à relais et, d'autre part, le gradateur ou variateur de tension, pour commander en toute sécurité l'arrêt de fonctionnement de ce dernier, après mise en service de l'ensemble précité.

Selon une forme d'exécution particulière de l'invention, le manipulateur compend, outre le potentiomètre, deux séries de plots prévus pour mettre en service l'ensemble de contrôle et de commande, avec sélection du sens de rotation du moteur par action sur l'inverseur et avec sélection des enroulements de ce moteur par actionnement des différents contacteurs, les plots constituant des contacts mettant en service l'ensemble précité dès l'arrivée en position de fin de course du curseur du potentiomètre. Au moment de cette arrivée en fin de course, l'enroulement de plus petite vitesse du moteur se trouve alimenté directement, faisant ainsi tourner le moteur à une vitesse voisine de sa plus petite vitesse de synchronisme tant en montée qu'en descente. Partant de cet état, la commutation des enroulements permet d'atteindre des vitesses plus élevées.

Au cours de cette phase d'accélération, il peut se produire des effets dynamiques et des appels de courant indésirables, lors du passage d'un enroulement du moteur à un autre, et les réseaux d'alimentation existants ne sont pas toujours capables de fournir le courant nécessaire. Pour éviter ce genre de difficultés, il est prévu, selon une disposition complémentaire de l'invention, un autre gradateur ou variateur de tension à asservissement de courant, placé dans le circuit d'alimentation électrique de l'ensemble de contrôle et de commande à relais. Ce dispositif additionnel limite les appels de courant du moteur, notamment lors du passage sur l'enroulement "vitesse intermédiaire" puis sur l'enroulement "grande vitesse" ; il contribue ainsi à la réduction des sollicitations électriques et mécaniques, ce qui rend les accélérations très douces, en conservant un couple suffisant, vis-à-vis des règles de sécurité, pour un mouvement de levage.

Bien que l'invention possède des applications très générales dans le domaine de la manutention, l'équipement précédemment défini s'applique plus particulièrement à un mécanisme de levage de charges, avec un treuil entraîné à partir d'un moteur électrique asynchrone à cage et à enroulements multiples, dont le couple décroît continûment pour une valeur de glissement variant de 2 à zéro, en utilisation de l'enroulement "petite vitesse", cet équipement permettant la pose et le "décollement" de charges en douceur par utilisation en variateur de vitesse du gradateur de tension agissant sur l'enroulement du moteur correspondant à la plus petite vitesse de synchronisme.

De toute façon, l'invention sera mieux comprise à l'aide de la description qui suit, en référence au dessin schématique annexé représentant un mode de réalisation de cet équipement pour la commande de l'organe moteur électrique d'un mécanisme de manutention de charges, et illustrant le fonctionnement de cet équipement:

Figure 1 est un schéma de principe de l'équipement objet de l'invention;

Figure 2 est un schéma de détail du manipulateur;

Figures 3 et 4 sont des diagrammes illustrant, respectivement, le fonctionnement d'un équipement connu et le fonctionnement de l'équipement objet de l'invention, dans le cas où celui-ci comprend un deuxième gradateur ou variateur de tension.

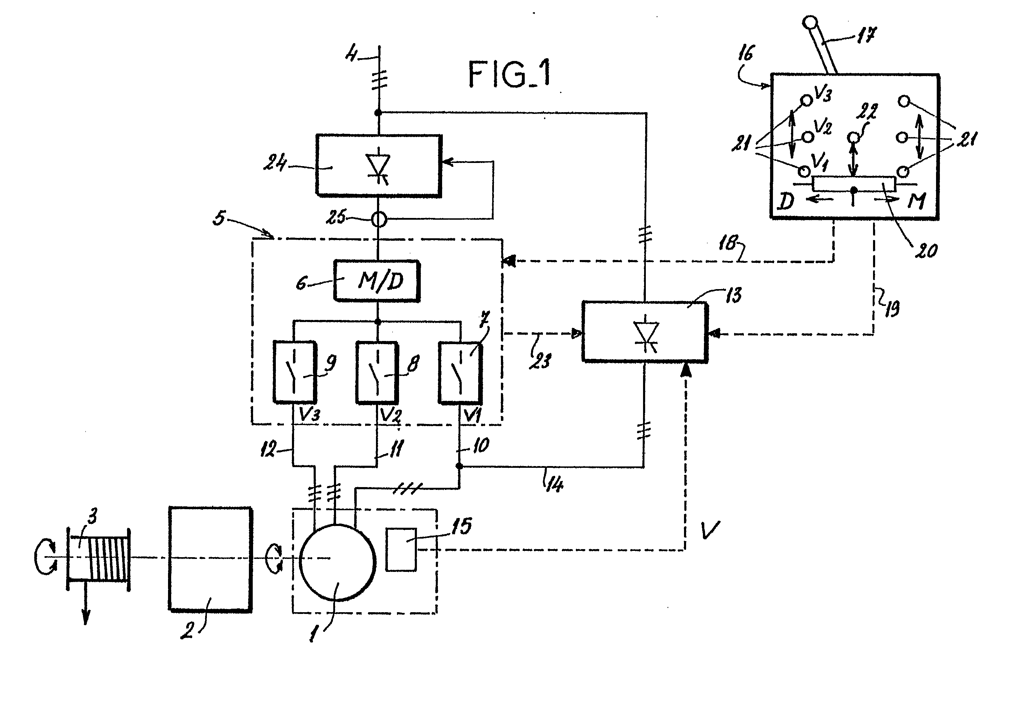

Sur le schéma de la figure 1, les traits continus représentent des circuits électriques de puissance triphasés, tandis que les lignes pointillés indiquent des circuits par lesquels transitent les ordres de commande et autres informations; les traits mixtes délimitent certains ensembles fonctionnels.

L'équipement représenté s'applique à la commande d'un moteur électrique triphasé 1, qui par l'intermédiaire d'un réducteur de vitesse 2 entraîne en rotation un treuil 3 appartenant à un engin de manutention de charges, notamment un engin de levage de charges tel que grue ou pont roulant.

Le moteur électrique triphasé 1, à deux sens de rotation, est un moteur avec rotor à cage et avec stator à enroulements multiples. Il s'agit, par exemple, d'un moteur à trois enroulements qui correspondent, respectivement, à des vitesses de synchronisme de 500, 1500 et 3000 tours/minute. La conception de ce moteur est telle que, lorsqu'il fonctionne sur l'enroulement donnant la plus petite vitesse, le couple fourni soit de valeur continûment décroissante pour une valeur de glissement allant de 2 à un glissement nul.

Le moteur électrique 1 est alimenté, à partir d'un réseau électrique triphasé 4, par l'intermédiaire d'un ensemble 5 de contrôle et de commande, à relais électromécaniques. L'ensemble 5 comprend un inverseur 6 qui permet de sélectionner le sens de rotation du moteur 1, correspondant soit à un mouvement de montée "M", soit à un mouvement de descente "D", si l'on se réfère à l'application particulière d'un engin de levage. L'ensemble 5 comprend encore une pluralité de contacteurs 7, 8, 9 qui permettent d'alimenter sélectivement les différents enroulements du moteur 1, éventuellement en réalisant des couplages de ces enroulements. On a indiqué en 10, 11, 12 les circuits d'alimentation triphasés qui, à partir de l'ensemble 5 de contrôle et de commande, aboutissent aux différents enroulements du moteur 1. On considère que: le contacteur 7 et le circuit 10 alimentent un enroulement donnant une petite vitesse V1, le contacteur 8 et le circuit 11 alimentent un enroulement donnant une vitesse intermédiaire V2, et le contacteur 9 et le circuit 12 alimentent un enroulement donnant une grande vitesse V3.

L'équipement comprend aussi, dans ses circuits de puissance, un gradateur ou variateur de tension 13 triphasé, monté en parallèle à l'équipement 5 de contrôle et de commande. Le gradateur de tension 13 est d'un type connu dit à "quatre quadrants", tel que celui commercialisé par LA TELEMECANIQUE ELECTRIQUE sous la dénomination "STATOVAR", permettant de commander une vitesse de moteur positive ou une vitesse de moteur négative, c'est-à-dire l'un ou l'autre des deux sens de rotation du moteur 1, pour un couple positif ou négatif, ceci dans toutes les combinaisons possibles explicitées ci-après :

1- vitesse positive et couple positif : commande d'un mouvement de montée, en phase d'accélération ou en régime établi ;
2- vitesse négative et couple positif : commande d'un mouvement de descente, en phase de ralentissement ou en régime établi ;
3- vitesse négative et couple négatif : commande d'un mouvement de descente, en phase d'accélération ;
4- vitesse positive et couple négatif : commande d'un mouvement de montée, en phase de ralentissement.

Le gradateur de tension 13 est alimenté directement à partir du réseau triphasé 4, et il alimente lui-même, par l'intermédiaire d'un circuit triphasé 14 se raccordant au circuit 10, l'enroulement du moteur 1 donnant la plus faible vitesse.

Ce gradateur de tension 13 est à asservissement de vitesse. Un capteur de vitesse 15 détecte la vitesse de rotation du moteur 1, ou d'une pièce rotative quelconque appartenant au mécanisme incluant le réducteur 2, le treuil 3 et les arbres de transmission. L'information de vitesse V est transmise depuis le capteur 15 jusqu'au gradateur de tension 13.

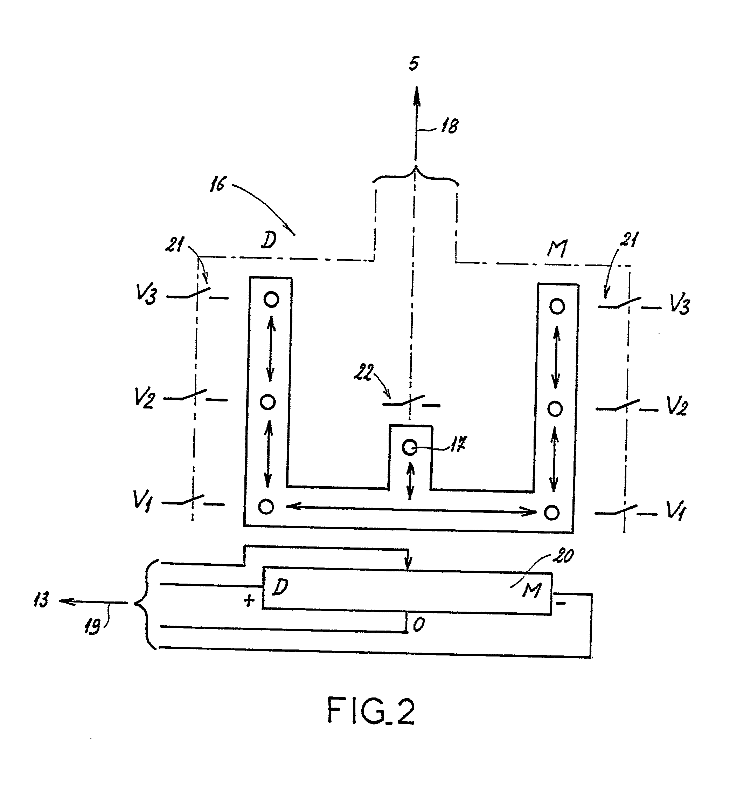

Un manipulateur 16, à levier de commande manuelle 17, est prévu au poste de conduite de l'engin, et relié d'une part à l'ensemble 5 de contrôle et de commande et d'autre part au gradateur de tension 13, par des circuits de pilotage respectifs 18 et 19. Le manipulateur 16, représenté plus en détail sur la figure 2, comporte un potentiomètre 20, une première série de plots 21 pour la commande du mouvement de montée "M", aux différentes vitesses V1,V2,V3, une deuxième série de plots 21 pour la commande du mouvement de descente "D" aux différentes vitesses V1,V2 et V3, et un dernier plot 22 correspondant à une position d'arrêt. Le même levier 17, hors de la position d'arrêt, met en service les fonctions correspondant au potentiomètre 20, en déplaçant le curseur de ce dernier, et aux deux séries de plots 21, en agissant alors sur des interrupteurs. Le potentiomètre 20 pilote le gradateur de tension 13, en sens et en valeur, par l'intermédiaire du circuit 19, tandis que les plots 21 sont en relation par le circuit 18 avec l'ensemble 5 de contrôle et de commande, pour la sélection des enroulements et du sens du mouvement.

Les fonctions et interactions des divers composants précédemment décrits apparaîtront plus clairement dans l'explication qui suit du fonctionnement de cet équipement, en prenant comme exemple l'opération de "décollement" puis de levée d'une charge, partant d'une position d'arrêt :

Dans un premier temps, un contact interne du manipulateur 16 met en service le gradateur de tension 13 uniquement, et le levier 17 agit sur le curseur du potentiomètre 20 ; la position du curseur donne une consigne de vitesse, en valeur et en signe.

Le gradateur de tension 13 alimente alors l'enroulement "petite vitesse" du moteur 1, pour le sens de rotation voulu et sous une tension qui est fonction du signe et de l'écart entre la vitesse réelle du mécanisme, détectée par le capteur 15, et la vitesse de consigne imposée par le potentiomètre 19. On commande ainsi la phase de démarrage et d'accélération, la vitesse obtenue étant liée au déplacement du levier 17 qui commande le potentiomètre 20.

En fin de course du curseur du potentiomètre 20, le manipulateur 16 intervient par ses plots 21, qui mettent en service l'ensemble 5 de commande et de contrôle, en provoquant tout d'abord une commutation qui place l'inverseur 6 dans la position correspondant au sens choisi pour le mouvement, soit montée ou descente. Le gradateur de tension 13 donnant alors une vitesse voisine de la vitesse maximum obtenue avec l'enroulement "petite vitesse" du moteur 1, l'ensemble 5 émet sur une liaison électrique 23 un ordre d'arrêt de fonctionnement du gradateur 13, et simultanément son contacteur 7 est actionné pour alimenter directement l'enroulement "petite vitesse". La charge est alors déplacée, dans le sens de la montée (en restant dans le cadre de l'exemple considéré), à une vitesse voisine de la plus faible vitesse de synchronisme du moteur 1.

La charge à lever étant supposée dégagée des obstacles éventuels, on considère que sa manutention peut se faire désormais à vitesse maximum. Par action sur le levier 17 du manipulateur 16, l'opérateur met en service successivement les différents plots 21 de l'une des deux séries, ce qui provoque l'alimentation des enroulements du moteur 1 dans l'ordre des vitesses croissantes, par l'intermédiaire des contacteurs 7, 8, 9 de l'ensemble 5. Plus particulièrement, dans cette phase, on provoque d'abord la mise en action du contacteur 8 qui alimente l'enroulement "vitesse intermédiaire", puis la mise en action du contacteur 9 qui alimente l'enroulement "grande vitesse". La charge peut alors être déplacée à la vitesse de montée maximum permise par la puissance du moteur 1.

Bien entendu, un processus inverse serait suivi pour la descente et la pose d'une charge.

Sur le dessin, l'équipement objet de l'invention est représenté avec un élément complémentaire, facultatif, qui est un autre gradateur de tension 24, installé dans le circuit d'alimentation de l'ensemble 5 de contrôle et de commande, en amont de ce dernier.

Le gradateur de tension 24 est un gradateur d'un type connu dit "unidirectionnel", c'est-à-dire ne contrôlant pas le sens de rotation du moteur, tel que celui commercialisé par LA TELEMECANIQUE ELECTRIQUE sous la dénomination "GRADIVAR". Grâce à un capteur d'intensité de courant 25 qui lui est adjoint, ce gradateur 24 permet par un asservissement interne de diminuer les appels de courant et les effets dynamiques associés, lors des commutations d'enroulements du moteur 1, et notamment à la mise en service des enroulements "vitesse intermédiaire" et "grande vitesse". L'utilisation de ce gradateur de tension supplémentaire 24, en combinaison avec un moteur 1 dont le rotor à cage est de conception particulière autorisant des démarrages à intensité réduite, permet des démarrages et accélérations avec une intensité maximale limitée par exemple à environ 3 fois l'intensité nominale, même pour un mouvement de levage.

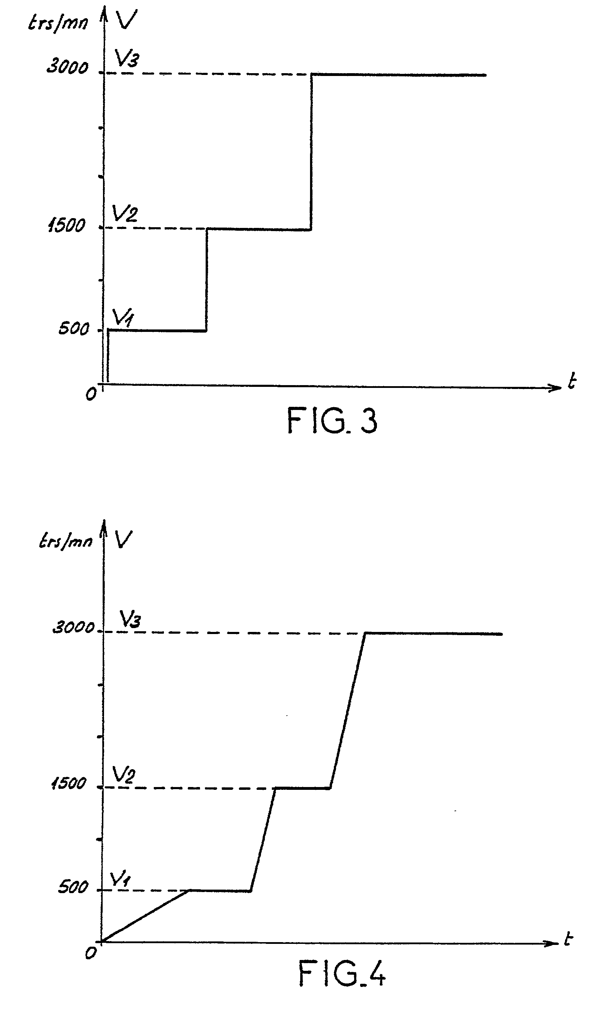

Les figures 3 et 4 sont des diagrammes qui illustrent le fonctionnement de l'équipement objet de l'invention comprenant le gradateur de tension supplémentaire 24, par comparaison avec un équipement connu.

Sur chacun de ces diagrammes, on a indiqué la variation de la vitesse V (en ordonnées) en fonction du temps t (en abscisses), lors du démarrage et de l'accélération réalisés en partant d'une position d'arrêt, par exemple au début de la levée d'une charge.

La figure 3 se réfère à l'utilisation d'un moteur électrique à enroulements multiples, possédant trois vitesses de synchronisme V1, V2 et V3 par exemple égales respectivement à 500, 1500 et 3000 tours/minute, sans intervention de l'équipement objet de l'invention. On note que dans ce cas il n'est pas possible de faire varier progressivement la vitesse V entre une valeur nulle et la première vitesse de synchronisme V1, et que les passages aux vitesses suivantes V2 et V3 s'effectuent eux aussi de façon brutale.

La figure 4 se réfère à l'utilisation du même moteur électrique, commandé par l'équipement objet de l'invention. Grâce au gradateur 13, on obtient ici une croissance progressive de la vitesse V entre une valeur nulle et la première vitesse de synchronisme V1. Les passages aux vitesses suivantes V2 et V3 s'effectuent eux aussi avec une certaine progressivité, grâce à la limitation d'intensité assurée par l'autre gradateur 24.

L'invention ne se limite pas au seul mode de réalisation de cet équipement qui a été décrit ci-dessus, à titre d'exemple ; elle en embrasse, au contraire, toutes les variantes respectant le même principe, quels qu'en soient les détails de construction et quelles qu'en soient les applications particulières dans le domaine de la manutention des charges. C'est ainsi qu'on ne sortirait pas du cadre de l'invention en modifiant le nombre des contacteurs de l'ensemble 5 et/ou des enroulements du moteur 1, ou encore en remplaçant les relais électromécaniques de l'ensemble 5 par des éléments statiques, électroniques ou logiques, qui rempliraient les mêmes fonctions. Il est à noter également que, dans le cas d'un équipement comprenant un gradateur de tension supplémentaire 24, celui-ci peut comporter des parties confondues avec celles du premier gradateur de tension 13.

**Revendications**

1. Equipement pour la commande de l'organe moteur électrique d'un mécanisme de manutention de charges, et en particulier d'un mécanisme (2, 3) de levage de charges, l'organe moteur étant un moteur électrique asynchrone (1) à cage et à enroulements multiples, correspondant à plusieurs vitesses de synchronisme (V1, V2, V3), cet équipement comprenant un ensemble (5) de contrôle et de commande à relais, avec un inverseur (6) et avec des contacteurs (7, 8, 9), pour l'alimentation sélective des différents enroulements du moteur électrique (1), et pour la sélection du sens de rotation de ce moteur (1), caractérisé en ce qu'il comprend en outre:
   – un gradateur ou variateur de tension (13), du type dit à "quatre quadrants", agissant sur l'enroulement du moteur électrique (1) correspondant à la plus petite vitesse (V1), ledit gradateur ou variateur (13) étant asservi en vitesse par un capteur (15) détectant la vitesse (V) du moteur (1) ou d'une partie mobile du mécanisme (2, 3), et
   – un manipulateur (16) avec un organe de commande manuelle (17) agissant d'une part sur un potentiomètre (20) dont la position pilote le gradateur ou variateur de tension (13) pour déterminer la vitesse du moteur (1) fonctionnant sur l'enroulement correspondant à la plus petite vitesse (V1), et d'autre part sur des contacts (21) mettant en service l'ensemble précité (5) de contrôle et de commande, pour l'alimentation directe des enroulements du moteur (1) correspondant à la ou chaque vitesse intermédiaire (V2) et à la plus grande vitesse (V3).

2. Equipement selon la revendication 1, caractérisé en ce qu'il est prévu une liaison électrique (23) entre, d'une part, l'ensemble (5) de contrôle et de commande à relais et, d'autre part, le gradateur ou variateur de tension (13), pour commander l'arrêt de fonctionnement de ce dernier après mise en service de l'ensemble précité (5).

3. Equipement selon la revendication 1 ou 2, caractérisé en ce qu'il comprend en outre un gradateur ou variateur de tension (24), à asservissement de courant, placé dans le circuit d'alimentation électrique de l'ensemble (5) de contrôle et de commande à relais.

4. Equipement selon l'une quelconque des revendications 1 à 3, caractérisé en ce que le manipulateur (16) comprend, outre le potentiomètre (20), deux séries de plots (21) prévus pour mettre en service l'ensemble (5) de contrôle et de commande avec sélection du sens de rotation du moteur (1) par action sur l'inverseur (6), et avec sélection des enroulements de ce moteur (1) par actionnement des différents contacteurs (7, 8, 9), les plots (21) constituant des contacts mettant en service l'ensemble (5) précité dès l'arrivée en position de fin de course du curseur du potentiomètre (20).

5. Equipement selon l'une quelconque des revendications 1 à 4, caractérisé en ce qu'il est appliqué à un mécanisme de levage de charges, avec un treuil (3) entraîné à partir d'un moteur électrique asynchrone (1) à cage et à enroulements multiples, dont le couple décroît continûment pour une valeur de glissement variant de 2 à zéro, en utilisation de l'enroulement "petite vitesse", cet équipement permettant la pose et le "décollement" de charges en douceur par utilisation en variateur de vitesse du gradateur de tension (13) agissant sur l'enroulement du moteur (1) correspondant à la plus petite vitesse de synchronisme (V1).

## Patentansprüche

1. Steuerung für einen Elektromotor einer Lastfördereinrichtung, insbesondere eines Hebezeugs, mit einem als Käfig-Asynchronmotor mit mehreren Wicklungen ausgebildeten Elektromotor, der mehreren Synchrongeschwindigkeiten (V1, V2, V3) entspricht und mit einer Relais-Steuerungseinrichtung (5) mit einer Umkehrschaltung (6) und mit Kontaktgebern (7, 8, 9) für die wahlweise Einschaltung der verschiedenen Wicklungen des Elektromotors (1) und für die Auswahl der Drehrichtung des Motors (1), dadurch gekennzeichnet, daß ein Spannungsregler oder eine Spannungsänderungsschaltung (13) vom Vierquadrantentyp die der kleinsten Geschwindigkeit (V1) entsprechende Wicklung beaufschlagt, wobei diese Schaltung (13) in der Geschwindigkeit von einem Aufnehmer (15) gesteuert ist, der die Geschwindigkeit (V) des Motors (1) oder eines beweglichen Teils des Mechanismus (2, 3) nachweist und daß ein Steuerungsgerät (16) mit einer von Hand betätigbaren Steuerung (17) einerseits ein Potentiometer (20) beaufschlagt, dessen Lage die Schaltung (13) zur Bestimmung der Geschwindigkeit des Motors (1) in Abhängigkeit von der der kleinsten Geschwindigkeit (V1) zugeordneten Wicklung steuert und andererseits Kontakte (21) beaufschlagt, die die Steuerungseinrichtung (5) für eine direkte Einschaltung der Motorwicklungen entsprechend der bzw. jeder Zwischengeschwindigkeit (V2) und der größten Geschwindigkeit (V3) einschaltet.

2. Steuerung nach Anspruch 1, dadurch gekennzeichnet, daß eine elektrische Verbindung (23) zwischen der Steuerungseinrichtung (5) und der Schaltung (13) vorgesehen ist, um die Schaltung anzuhalten, nachdem die Steuerungseinrichtung (5) eingeschaltet ist.

3. Steuerung nach Anspruch 1 oder 2, dadurch gekennzeichnet, daß in der Versorgungsspannungsschaltung der Steuerungseinrichtung (5) ein Spannungsregler oder eine Spannungsänderungsschaltung (24) für die Steuerung des Stroms vorgesehen ist.

4. Steuerung nach einem der Ansprüche 1 bis 3, dadurch gekennzeichnet, daß das Steuerungsgerät (16) zusätzlich zum Potentiometer (20) zwei Reihen Kontakte (21) aufweist, die die Steuerungseinrichtung (5) einschalten, und zwar mit Auswahl der Drehrichtung des Motors (1) durch Betätigung der Umkehrschaltung (6) und mit Auswahl der Wicklung des Motors (1) durch Betätigung der verschiedenen Kontaktgeber (7, 8, 9), wobei die Kontakte (21) die Steuerungseinrichtung (5) einschalten, sobald der Läufer des Potentiometers (20) am Ende seiner Bahn angelangt ist.

5. Steuerung nach einem der Ansprüche 1 bis 4, dadurch gekennzeichnet, daß bei Anwendung der Steuerung bei einem Hebezeug eine Winde (3) vorgesehen ist, die von einem elektrischen Käfig-Asynchronmotor (1) mit mehreren Wicklungen angetrieben ist, dessen Drehmoment mit einem Gleitwert zwischen zwei und null kontinuierlich abnimmt, wobei bei Einschaltung der Wicklung für die geringe Geschwindigkeit die Steuerung ein sachtes Starten und Bewegen der Last durch Betätigen der Schaltung (13) ermöglicht, die auf diejenige Wicklung des Motors (1) einwirkt, die der kleinsten Synchrongeschwindigkeit (V1) entspricht.

## Claims

1. Control equipment for the electric motor system of a load handling device, and in particular of a device (2, 3) for the lifting of loads, the motor system being an asynchronous electric motor (1) with a squirrel-cage and multiple windings, corresponding to several synchronous speeds (V1, V2, V3), this equipment comprising a supervision and control assembly (5) with relays, with an invertor (6) and with contactors (7, 8, 9) for the selective supply of current to the different windings of the electric motor (1), and for the selection of the direction of rotation of this motor (1), characterized in that it also comprises:

– a voltage regulator or variator (13), of the type known as "four quadrants", acting on the winding of the electric motor (1) corresponding to the lowest speed (V1), the said regulator or variator (13) being servo-controlled for speed by a sensor (15) detecting the speed (V) of motor (1) or of a movable part of the device (2, 3), and

– a manipulator (16) with a manual control device (17) acting on one hand on a potentiometer (20) the position of which pilots the voltage regulator or variator (13) to determine the speed of motor (1), acting on the winding corresponding to the lowest speed (V1), and acting on the other hand on the contacts (21) bringing into action the abovementioned supervision and control assembly (5) for direct supply of current to the windings of motor (1) corresponding to the or to each intermediate speed (V2) and to the maximum speed (V3).

2. Equipment according to Claim 1, characterized in that an electric connection (23) is provided between on one hand the supervision and control assembly (5) with relays, and on the other hand the voltage regulator or variator (13) to order the latter to cease to operate after the above-mentioned assembly (5) has been brought into service.

3. Equipment according to Claim 1 or 2, characterized in that it also comprises a voltage regulator or variator (24) for servo-control of the current, placed in the circuit supplying current to the supervision and control assembly (5) with relays.

4. Equipment according to any of Claims 1 to 3, characterized in that the manipulator (16) comprises, in addition to the potentiometer (20), two series of contact studs (21) provided to bring into service the supervision and control assembly (5) with selection of the direction of rotation of motor (1) by action on the invertor (6), and with selection of the windings of this motor (1) by actuating the different contactors (7, 8, 9), the contact studs (21) being the contacts bringing the above assembly (5) into service after the arrival of the cursor of potentiometer (20) in its end of track position.

5. Equipment according to any one of Claims 1 to 4, characterized in that it is applied to a device for raising weights, with a windlass (3) driven by means of an asynchronous electric motor (1) with squirrel cage and with multiple windings, the torque of which continuously decreases for a value of slip varying from 2 to zero whilst using the "low speed" winding, this equipment allowing gentle release and "picking up" of loads by using as a speed variator the voltage regulator (13) acting on the winding of motor (1) that corresponds to the lowest synchronous speed (V1).

FIG_1

EP 0 248 747 B1

FIG.2

FIG. 3

FIG. 4